# EUROPÄISCHE PATENTSCHRIFT

(11) **EP 2 262 601 B1**
(45) Veröffentlichungstag und Bekanntmachung des Hinweises auf die Patenterteilung: **25.02.2015**
(21) Anmeldenummer: 08873029.6
(22) Anmeldetag: 09.12.2008
(51) Int. Cl.: B23B 31/12

(54) **HANDWERKZEUGMASCHINE**
HAND-HELD MACHINE TOOL
MACHINE-OUTIL A MAIN

(30) Priorität: 29.02.2008 DE 102008000470
(43) Veröffentlichungstag der Anmeldung: 22.12.2010
(73) Patentinhaber: Robert Bosch GmbH, 70442 Stuttgart (DE)
(72) Erfinder: ROEHM, Heiko, 70176 Stuttgart (DE)
(86) Internationale Anmeldenummer: PCT/EP2008/067065
(87) Internationale Veröffentlichungsnummer: WO 2009/106178

(56) Entgegenhaltungen:
- WO-A-02/16066
- DE-A1- 19 802 080
- DE-C1- 19 506 708
- GB-B- 2 377 193

## Beschreibung

### Stand der Technik

Die Erfindung betrifft eine Handwerkzeugmaschine gemäß dem Oberbegriff des Anspruchs 1.

Handgeführte Elektrowerkzeuge, wie z.B. (Akku-)Schrauber, (Akku-)Bohrschrauber oder (Akku-)Schlagbohrmaschinen weisen üblicherweise eine als Bohrfutter ausgebildete Werkzeugspanneinheit zum Spannen von Werkzeugen wie Rundschaftbohrern, oder Schraubenbits mit Sechskantende auf. Darüber hinaus sind bekannte Handwerkzeugmaschinen typischerweise mit einem Planetenschaltgetriebe mit Drehmomentkupplung ausgestattet, wobei die Drehmomentkupplung mittels eines Einstellrings einstellbar ist, der in axialer Richtung benachbart zu dem Bohrfutter angeordnet ist. Üblicherweise haben bekannte Handwerkzeugmaschinen in erster Näherung eine L-Form mit einem rückwärtigen Handgriff. Nachteilig bei derartigen Bauformen ist die Gesamtbaulänge des Mechanikstranges, der die Anwendung der Handwerkzeugmaschine an engen Stellen limitiert. Darüber hinaus resultieren aus der großen Gesamtbaulänge große, von einer Bedienperson abzustützende Haltemomente. Vorteilhaft ist bei der beschriebenen L-förmigen Bauform die gute Bedienbarkeit des Einstellrings, da dieser vollständig umgriffen werden kann.

Gemäß einer bekannten, alternativen Ausführungsform ist der Handgriff unterhalb des Einstellrings angeordnet. Bei derartigen Bauformen ist vorteilhaft, dass sich das Werkzeuggewicht weniger stark auf das von der Bedienperson aufzubringende Haltemoment auswirkt. Nachteilig ist die eingeschränkte Zugriffsmöglichkeit auf den Einstellring zu Bedienungszwecken.

Aus der DE 195 06 708 A1 und der DE 198 02 080 A1 sind Handbohrmaschinen bekannt, bei denen die als Bohrfutter ausgebildete Werkzeugspanneinheit in axialer Richtung in ein Spindelgehäuse hineinragt. Einen axial zum Bohrfutter angeordneten Einstellring zur Begrenzung des maximal aufzubringenden Drehmoments weisen die beschriebenen Handbohrmaschinen nicht auf.

Aus der WO 02/16066 A1 ist eine Handwerkzeugmaschine mit Drehmomentkupplung bekannt, wobei die Drehmomentkupplung mittels eines Einstellrings einstellbar ist, der in axialer Richtung benachbart zu dem Bohrfutter angeordnet ist.

Darüber hinaus ist es aus der GB 2 337 952 B bekannt, einen Einstellring axial mit einer Spanneinheit überlappen zu lassen, wobei der Einstellring der Bedienung der Spanneinheit dient.

### Offenbarung der Erfindung

### Technische Aufgabe

Der Erfindung liegt die Aufgabe zugrunde, eine einen Einstellring aufweisende Handwerkzeugmaschine vorzuschlagen, die komfortabel bei beengten Raumverhältnissen eingesetzt werden kann. Ferner besteht die Aufgabe darin, einen Einstellring für eine Handwerkzeugmaschine vorzuschlagen, der es erlaubt, die Handwerkzeugmaschine derart auszubilden, dass sie auch bei beengten Raumverhältnissen komfortabel einsetzbar ist.

### Technische Lösung

Diese Aufgabe wird hinsichtlich der Handwerkzeugmaschine mit den Merkmalen des Anspruchs 1 gelöst. Vorteilhafte Weiterbildungen der Erfindungen sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung hat erkannt, dass es, um die Handwerkzeugmaschine auch bei beengten Raumverhältnissen komfortabel einsetzen zu können, notwendig ist, deren Baulänge zu verkürzen. Die Erfindung schlägt zur Verkürzung der Baulänge vor, radial innerhalb des mit Abstand zum vorderen Ende der Handwerkzeugmaschine vorgesehenen Einstellrings einen, insbesondere ringförmigen, Hohlraum vorzusehen, in dem ein axial hinteres Ende der Werkzeugspanneinheit aufgenommen werden kann. Anders ausgedrückt, wird die Werkzeugspanneinheit bei einer nach dem Konzept der Erfindung ausgebildeten Handwerkzeugmaschine weiter nach hinten, zumindest zeitweise, abschnittsweise in den Einstellring hineinversetzt, um hierdurch die Baulänge der Handwerkzeugmaschine zu reduzieren, mit der Folge, dass die Handwerkzeugmaschine auch bei beengten Raumverhältnissen komfortabler eingesetzt werden kann. Ein weiterer, aus der Erfindung resultierender Vorteil besteht darin, dass das von der Bedienperson abzustützende Haltemoment beim Arbeiten mit der Handwerkzeugmaschine aufgrund des verkürzten, insbesondere in erster Näherung L-förmigen, Handwerkzeuges verringert ist. Ein weiterer Vorteil besteht darin, dass aus der abschnittsweisen Anordnung der Werkzeugspanneinheit im Einstellring bzw. aus der Anordnung der vorderen Lagerstelle der Antriebswelle zumindest teilweise innerhalb der Werkzeugspanneinheit, ein geringerer Werkzeugrundlauffehler resultiert, wodurch der Rundlauf des Werkzeugs insgesamt, bei Beibehaltung von bisher bestehenden Fertigungstoleranzen für die Werkzeugspanneinheit und die Abtriebswelle, verbessert wird.

In Weiterbildung der Erfindung ist mit Vorteil vorgesehen, dass das in axialer Richtung nach vorne, also in Richtung des vorderen freien Endes des Werkzeugs von dem Einstellring überragte, axial hintere Ende der Werkzeugspanneinheit, zumindest zeitweise von einer äußeren Stellhülse der Werkzeugspanneinheit gebildet ist. Mittels der Stellhülse ist die Werkzeugspanneinheit zur Aufnahme oder Entnahme eines Werkzeugs öffenbar und zum Festlegen eines Werkzeugs verschließbar. Bevorzugt ist die Stellhülse hierzu in Umfangsrichtung verdrehbar angeordnet. Besonders bevorzugt greift die Stellhülse mit einem Innengewinde in ein Außengewinde von Spannbacken zum Verstellen derselben ein. Es ist auch denkbar, dass die Werkzeugspanneinheit als sogenanntes Schnellspannbohrfutter ausgebildet ist. Die Formulierung "zumindest zeitweise gebildetes hinteres Ende" ist so zu verstehen, dass je nach Ausbildung der Werkzeugspanneinheit das hintere Ende der Werkzeugspanneinheit zeitweise, bei geöffneter Werkzeugspanneinheit von einem anderen Bauelement der Werkzeugspanneinheit, insbesondere, wie später noch erläutert werden wird, einer Spannbacke gebildet werden kann. Es ist auch eine Ausführungsform realisierbar, bei der die Spannbacke die Stellhülse in axialer Richtung nach hinten auch bei geöffneter Werkzeugspanneinheit nicht überragt. In diesem Fall wird das axial hintere Ende der Werkzeugspanneinheit bevorzugt dauerhaft von der Stellhülse, oder, wie später noch erläutert werden wird, von einem in axialer Richtung statischen, d.h. axial nicht verstellbaren, vorzugsweise rotierbaren, Ringelement der Werkzeugspanneinheit, gebildet. Bevorzugt ist eine Ausführungsform, bei der der Einstellring das axiale Ende der Werkzeugspanneinheit radial außen überragt, wobei es auch realisierbar ist, dass der Einstellring axial in einen Bereich radial innerhalb der äußeren Grenze der Werkzeugspanneinheit hineinragt.

Wie zuvor ausgeführt, ist eine Ausführungsform realisierbar, bei der das axial hintere, von dem Einstellring in axialer Richtung nach vorne überragte, hintere Ende der Werkzeugspanneinheit zeitweise oder dauerhaft von einem nicht verstellbaren, d.h. statischen, Ringelement gebildet ist. Bevorzugt ist es, dabei in axialer Richtung vor dem statischen Ringelement eine Stellhülse zum Bedienen der Werkzeugspanneinheit anzuordnen. Besonders vorteilhaft bei der beschriebenen Ausführungsform mit einem axial in den Einstellring hineinragenden in axialer Richtung statischen Ringelement sowie bei einer Ausführungsform, bei der das hintere Ende der Werkzeugspanneinheit von einer Stellhülse, vorzugsweise von einer Stirnseite der Stellhülse, gebildet ist, ist die resultierende geringere Staubempfindlichkeit der Handwerkzeugmaschine. Durch die überlappende Anordnung des Einstellrings mit dem statischen Ringelement oder der Stellhülse wird der Staubeintritt in das Getriebegehäuse hinein erschwert.

Besonders bevorzugt ist eine Ausführungsform, bei der das hintere Ende der Werkzeugspanneinheit, das in axialer Richtung in den Einstellring hineinragt, zumindest zeitweise, insbesondere bei vollständig geöffneter Werkzeugspanneinheit, von mindestens einem verstellbaren Spannelement, insbesondere einer Spannbacke der Werkzeugspanneinheit, gebildet ist. Bevorzugt ist es dabei, dass die Spannbacke eine Stellhülse und/oder ein statisches Ringelement der Werkzeugspanneinheit in axialer Richtung nach hinten überragt. Dabei ist es möglich, dass die Spannbacke dauerhaft das axial hintere Ende der Werkzeugspanneinheit, also in jeder Verstellposition, bildet, oder aber nur bei geöffneter Werkzeugspanneinheit, wobei in diesem Fall das hintere Ende bei geschlossener Werkzeugspanneinheit von einem anderen Bauteil der Werkzeugspanneinheit gebildet wird, welches axial benachbart zum Einstellring enden kann oder aber bevorzugt in axialer Richtung in den Einstellring hineinragt.

Besonders bevorzugt ist eine Ausführungsform, bei der das axial hintere Ende der Werkzeugspanneinheit, also bevorzugt eine Verstellhülse, ein statisches Ringelement und/oder mindestens eine Spannbacke, in eine nach axial vorne, zumindest teilweise, offene Kammer hineinragt, die radial innerhalb des Außenumfangs des Einstellrings ausgebildet ist.

Von besonderem Vorteil ist eine Ausführungsform, bei der die innerhalb des Einstellrings ausgebildete Kammer in axialer Richtung nach hinten von dem Einstellring begrenzt ist, vorzugsweise von einer nach radial innen weisenden Ringwand. Bevorzugt erstreckt sich die Ringwand dabei nach radial innen bis auf ein weiteres Bauteil der Handwerkzeugmaschine, vorzugsweise bis auf das Getriebegehäuse, vorzugsweise unter Einhaltung eines minimalen Führungsspaltes, um ein Verdrehen des Einstellrings in Umfangsrichtung um die Abtriebswelle herum weiterhin zu ermöglichen. Durch das Vorsehen der Ringwand wird ein Schmutzeintritt in einen Bereich axial hinter der Ringwand, wo bevorzugt eine mit dem Einstellring zu verstellende Drehmomentkupplung angeordnet ist, verhindert bzw. erschwert.

In Weiterbildung der Erfindung ist vorgesehen, dass der, vorzugsweise einstückig mit dem, insbesondere aus Kunststoff bestehenden, Einstellring ausgebildeten, Ringwand ein Axialanschlag zugeordnet ist, so dass die Ringwand durch Zusammenwirken mit dem Axialanschlag ein Verstellen des Einstellrings in zumindest eine Axialrichtung, vorzugsweise in axialer Richtung nach vorne, verhindert. Besonders bevorzugt ist der Axialanschlag als Sicherungsring ausgebildet, der in einer Umfangsnut des Getriebegehäuses formschlüssig gehalten ist.

Erfindungsgemäß ist dem Einstellring der Handwerkzeugmaschine eine Drehmomentkupplung zugeordnet, wobei mit Hilfe des Einstellrings durch Verdrehen des Einstellrings in Umfangsrichtung zwischen mindestens zwei maximal mit der Werkzeugspanneinheit übertragbaren Drehmomenten wählbar ist.

Besonders bevorzugt ist es, wenn die Drehmomentkupplung derart ausgebildet ist, dass sie mittels des Einstellrings verriegelbar ist, so dass mit Hilfe des in der Werkzeugspanneinheit gehaltenen Werkzeugs das maximal über das, insbesondere als Planetengetriebe ausgebildete Getriebe, bereitgestellte Drehmoment übertragen werden kann.

Zusätzlich oder alternativ zur Kopplung des Einstellrings mit der Drehmomentkupplung ist es in Weiterbildung der Erfindung vorgesehen, dass mittels des Einstellrings eine Getriebefunktion einstellbar ist. Beispielsweise kann gemäß einer bevorzugten Ausführungsform mit dem Einstellring eine Schlagbohrfunktion aktiviert oder deaktiviert werden, für den Fall, dass es sich bei der Handwerkzeugmaschine um einen, insbesondere mit einem Akkumulator betriebenen, Schlagbohrer handelt.

Aus Gründen der Bauraumoptimierung ist es vorteilhaft, wenn das vordere Ende des Getriebegehäuses in der Werkzeugspanneinheit aufgenommen ist.

Bevorzugt ist vorgesehen, dass radial innerhalb der radial äußeren Grenze des Einstellrings ein Hohlraum, also ein innerer Hohlraum, vorgesehen ist, der derart ausgebildet und angeordnet ist, dass in diesem ein axiales Ende einer Werkzeugspanneinheit, die vorzugsweise lösbar an der Werkzeugspanneinheit festlegbar ist, aufnehmbar ist. Bevorzugt handelt es sich bei dem Hohlraum um eine in axialer Richtung nach vorne offene Kammer, insbesondere um eine Ringkammer, die besonders bevorzugt nach axial hinten mittels einer Ringwand abgeschlossen ist, vorzugsweise in einem Bereich axial vor einer Drehmomentkupplung. Zur Vermeidung von Wiederholungen wird im Hinblick auf mögliche vorteilhafte Ausgestaltungen des Einstellrings auf die vorhergehende Beschreibung verwiesen, in der bevorzugte Ausführungsbeispiele des Einstellrings in Zusammenhang mit der Handwerkzeugmaschine beschrieben sind.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine ausschnittsweise Darstellung einer Handwerkzeugmaschine mit einer lösbar befestigbaren Werkzeugspanneinheit, wobei die Spanneinheit vollständig geöffnet ist,
- Fig. 2:: die Handwerkzeugmaschine gemäß Fig. 1 mit vollständig geschlossener Werkzeugspanneinheit,
- Fig. 3:: in einer ausschnittsweisen Darstellung eine Handwerkzeugmaschine mit einer in axialer Richtung langen Werkzeugspanneinheit und
- Fig. 4:: in einer ausschnittsweisen Darstellung eine Handwerkzeugmaschine mit einer sogenannten Standard-Werkzeugspanneinheit.

### Ausführungsformen der Erfindung

In den Figuren sind gleiche Bauteile und Bauteile mit der gleichen Funktion mit den gleichen Bezugszeichen gekennzeichnet.

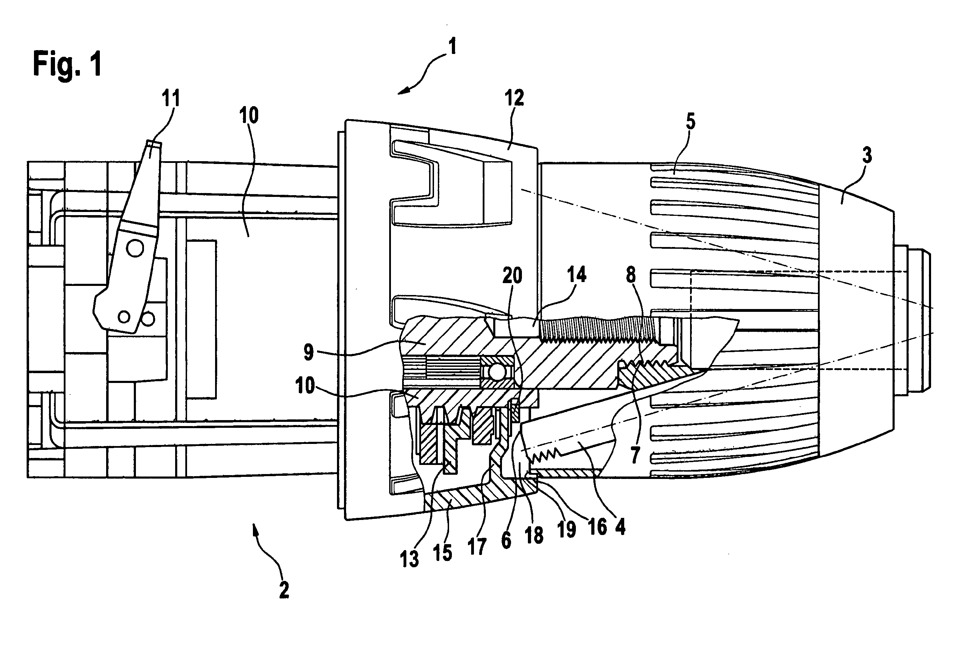

In Fig. 1 ist ein axial vorderer Bereich eines Mechanikstrangs 1 einer Handwerkzeugmaschine 2 gezeigt. Die nur ausschnittsweise dargestellte Handwerkzeugmaschine 2 ist in dem gezeigten Ausführungsbeispiel in an sich bekannter Weise, zumindest näherungsweise, L-förmig ausgebildet, wobei sich der nicht gezeigte Handgriff im Wesentlichen senkrecht zum Mechanikstrang 1 erstreckt. Bei der gezeigten Handwerkzeugmaschine 2 handelt es sich um einen sogenannten Bohr-Schrauber, mit dem sowohl Schraub- als auch Bohrtätigkeiten ausgeführt werden können. Hierzu muss lediglich in einer axial vorderen Werkzeugspanneinheit 3 das passende Werkzeug festgelegt werden.

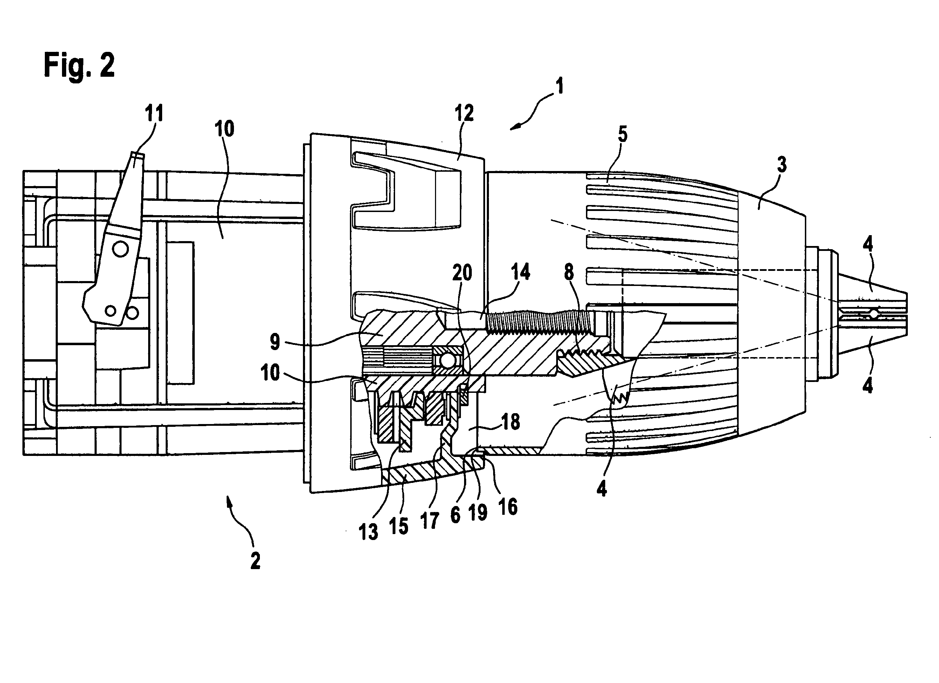

Bei der Werkzeugspanneinheit 3 handelt es sich um ein Bohrfutter mit drei verstellbaren, gleichmäßig in Umfangsrichtung verteilt angeordneten Spannbacken 4, die zwischen einer in Fig. 1 gezeigten Öffnungsstellung durch Verdrehen einer Stellhülse 5 in Umfangsrichtung und einer in Fig. 2 gezeigten Schließstellung (hier ohne aufgenommenes Werkzeug) in an sich bekannter Weise verstellt werden können. Die Werkzeugspanneinheit 3 ist im Gegensatz zu bekannten Werkzeugspanneinheiten so bemessen, dass die Stellhülse 5 in der in Fig. 1 gezeigten maximalen Öffnungsstellung von den Spannbacken 4 in axialer Richtung nach hinten überragt wird. In der in Fig. 1 gezeigten maximalen Öffnungsstellung der Werkzeugspanneinheit 3 bilden also die hinteren Enden der Spannbacken 4 das axial hintere Ende 6 der Werkzeugspanneinheit 3.

Wie aus Fig. 1 zu entnehmen ist, ist die Werkzeugspanneinheit 3 mit Hilfe eines integralen Innengewindeabschnitts 7 mit einem vorderen Außengewindeabschnitt 8 einer Abtriebswelle 9 der Handwerkzeugmaschine 2 lösbar verschraubt, wobei die Abtriebswelle 9 über ein, in einem Getriebegehäuse 10 angeordnetes, nicht gezeigtes, vorzugsweise als Planetengetriebe ausgebildetes, Schaltgetriebe drehmomentübertragend mit einem nicht dargestellten elektrischen Antriebsmotor verbunden ist. Dem nicht gezeigten Getriebe ist ein Schalthebel 11 zugeordnet, mit dem das Getriebe zwischen mindestens zwei Übersetzungsstufen verstellt werden kann.

Axial zwischen dem Schalthebel 11 und dem vordersten Ende der Handwerkzeugmaschine 2 befindet sich ein Einstellring 12, der sich in Umfangsrichtung um die Abtriebswelle 9 herum erstreckt. Der Einstellring 12 ist in an sich bekannter Weise mit einer radial inneren Drehmomentkupplung 13 verbunden, so dass durch Verstellen des Einstellrings 12, der in dem gezeigten Ausführungsbeispiel als Spritzgussteil aus Kunststoff ausgebildet ist, das maximal übertragbare Drehmoment eingestellt werden kann. In dem gezeigten Ausführungsbeispiel ist die Drehmomentkupplung 13 zusätzlich mit Hilfe des Einstellrings 12, insbesondere für Bohraufgaben, sperrbar. Wie sich weiterhin aus Fig. 1 ergibt, befindet sich zentrisch innerhalb der Abtriebswelle 9 eine nach vorne offene Sacklochbohrung 14 mit Innengewinde zur Aufnahme einer Befestigungsschraube zum Festlegen der Werkzeugspanneinheit 3.

Wie sich aus Fig. 1 ergibt, umfasst der Einstellring 12 eine äußere, ringförmige Umfangswand 15, deren Außendurchmesser sich nach vorne etwas verjüngt. Von der Umfangswand 15 zweigt mit Axialabstand zu dem vorderen Ende 16 der Umfangswand 15 eine Ringwand 17 ab, die, abgesehen von einem minimalen Spalt, radial bis zum Getriebegehäuse 10 reicht und somit einen Hohlraum, hier eine Kammer 18, radial innerhalb der Umfangswand 15 in axialer Richtung nach hinten begrenzt, wodurch die Drehmomentkupplung 13 vor einem Staubeintritt geschützt wird.

In die Kammer 18 ragen die Spannbacken 4 in ihrer maximalen Öffnungsstellung in axialer Richtung hinein. Anders ausgedrückt überragt der Einstellring 12, hier die Umfangswand 15, das axial hintere Ende 6 der Werkzeugspanneinheit 3 in axialer Richtung nach vorne. Noch anders ausgedrückt ist das vordere Ende 16 (hier die vordere Stirnseite) des Einstellrings 12 in axialer Richtung vor dem axial hinteren Ende 6 (hintere Stirnseite der Spannbacken 4) angeordnet, so dass Bauraum eingespart wird, wodurch das Handwerkzeug auch bei beengten Platzverhältnissen komfortabel einsetzbar ist. Das hintere Ende der Werkzeugspanneinheit 3 liegt hinter der vorderen Stirnseite des Getriebegehäuses 10.

Wie sich aus Fig. 1 weiter ergibt, überragt das vordere Ende des Einstellrings 12 nicht nur das hintere Ende der Spannbacken 4, sondern auch die hintere Stirnseite 19 der Stellhülse 5 der Werkzeugspanneinheit 3.

In Fig. 2 ist zu erkennen, dass die Spannbacken 4 bei vollständig geschlossener Werkzeugspanneinheit 3 in axialer Richtung gesehen vor dem vorderen Ende 16 des Einstellrings 12 enden. In diesem Stellzustand wird das axial hintere Ende 6 der Werkzeugspanneinheit 3 von der Stellhülse 5, genauer von der hinteren Stirnseite 19 der Stellhülse 5 gebildet. Dieses wird in axialer Richtung nach vorne radial außen von dem vorderen Ende 16 des Einstellrings 12 überragt. Alternativ ist eine Ausführungsform realisierbar, bei der die hintere Stirnseite 19 der Stellhülse 5 radial innen in axialer Richtung von dem Einstellring 12 überragt wird.

Wie erwähnt, ragt die Ringwand 17 in radialer Richtung bis nahezu an das Getriebegehäuse 10, welches radial außen an die Abtriebswelle 9 angrenzt. Axial vor dem radial inneren Endbereich der Ringwand 17 ist ein als Sicherungsring ausgebildeter Axialanschlag 20 angeordnet, der in einer äußeren Umfangsnut des Getriebegehäuses 10 gehalten ist. Durch Anschlagen der Ringwand 17 an dem Axialanschlag 20 wird ein axiales Verstellen des Einstellrings 12 nach vorne über die gezeigte Position hinaus sicher verhindert.

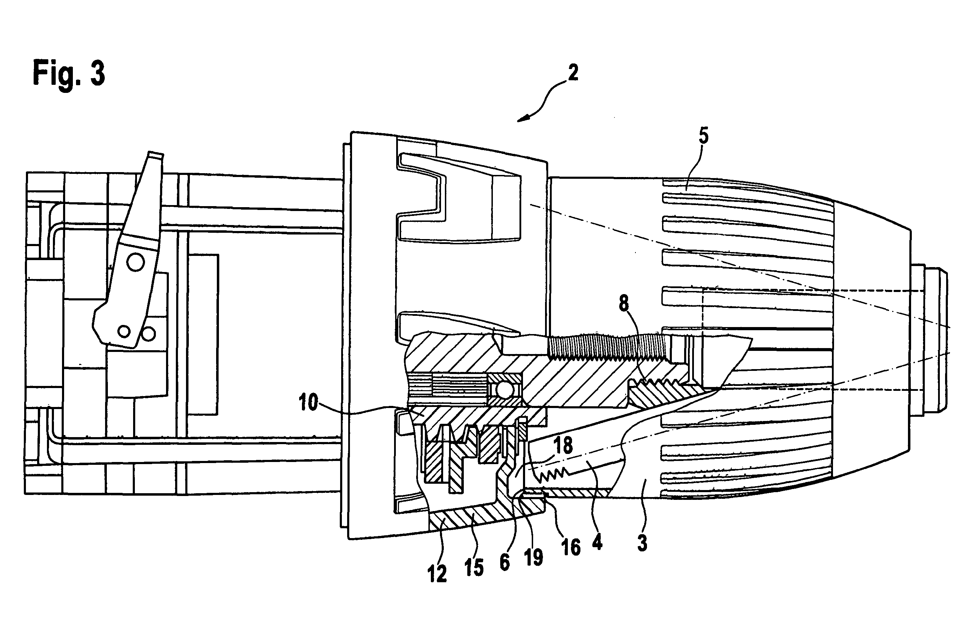

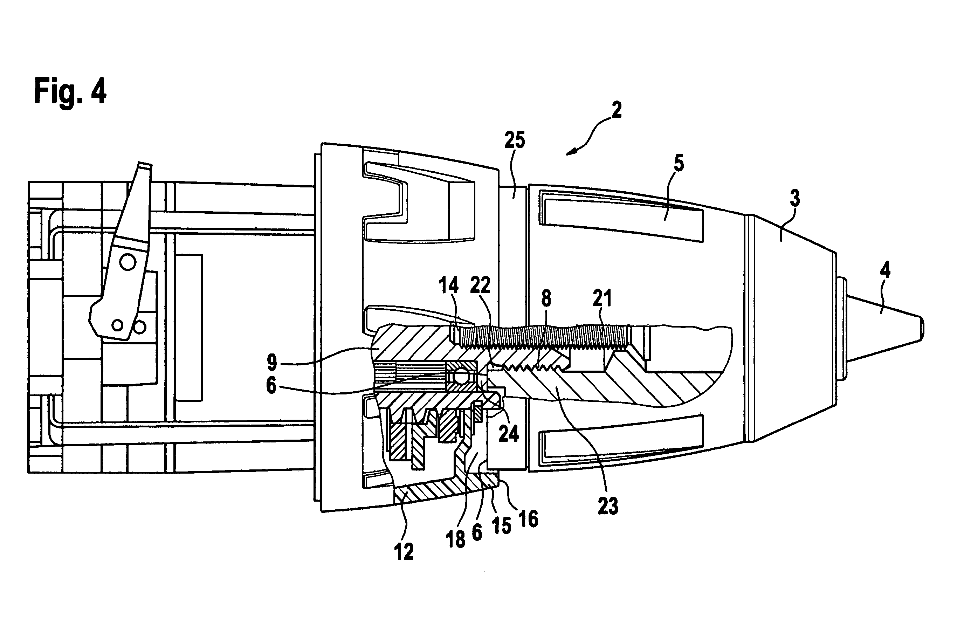

Im Folgenden werden weitere Ausführungsbeispiele anhand der Fig. 3 und 4 erläutert. Dabei wird im Wesentlichen auf Unterschiede zu dem zuvor beschriebenen Ausführungsbeispiel eingegangen, wobei zur Vermeidung von Wiederholungen im Hinblick auf die Gemeinsamkeiten auf die vorhergehende Beschreibung sowie die Fig. 1 und 2 verwiesen wird.

In Fig. 3 ist eine Handwerkzeugmaschine 2 gezeigt, an der am Außengewindeabschnitt 8 eine sogenannte lange, als Bohrfutter ausgebildete, Werkzeugspanneinheit 3 festgelegt ist. Diese umfasst wieder drei Spannbacken 4, die sowohl axial als auch gleichzeitig radial mit Hilfe der Stellhülse 5 verstellbar sind. In Fig. 3 ist die maximale Öffnungsposition der Werkzeugspanneinheit 3 gezeigt, also die hinterste Stellposition der Spannbacken 4. Zu erkennen ist, dass die Stellhülse 5 das hintere Ende der Spannbacken 4 in axialer Richtung nach hinten überragt. Das axial hintere Ende 6 der Werkzeugspanneinheit 3 wird folglich dauerhaft von der hinteren Stirnseite 19 der Stellhülse 5 und zu keiner Zeit von den Spannbacken 4 gebildet. Wie aus Fig. 3 hervorgeht, überragt der Einstellring 12, genauer das vordere Ende 16 des Einstellrings 12, das hintere Ende 6 der Werkzeugspanneinheit 3, genauer die hintere Stirnseite 19 der Stellhülse 5, in axialer Richtung nach vorne und die Stellhülse 5 umschließt das vordere Ende des Getriebegehäuses 10. Dabei ist die Stellhülse 5 mit ihrem hinteren Abschnitt in der Kammer 18 radial innerhalb der Umfangswand 15 des Einstellrings 12 angeordnet. Die Kammer 18 ist wie bei dem Ausführungsbeispiel gemäß Fig. 1 und 2 ausgebildet.

In Fig. 4 ist ein weiteres Ausführungsbeispiel einer Handwerkzeugmaschine 2 gezeigt. Diese weist eine als Standard-Bohrfutter ausgebildete Werkzeugspanneinheit 3 auf. Diese umfasst eine in Umfangsrichtung verstellbare Verstellhülse 5 zum Verstellen von Spannbacken 4. Die Werkzeugspanneinheit 3 ist nicht mit Hilfe eines integralen Innengewindeabschnittes, sondern mit Hilfe einer separaten Befestigungsschraube 21 an der Abtriebswelle 9 festgelegt, wobei die Befestigungsschraube 21 in das Innengewinde der zentrischen Sacklochbohrung 14 verschraubt ist. Der Außengewindeabschnitt 8 der Abtriebswelle 9 wird umgriffen von einem inneren Hülsenabschnitt 23, der sich stirnseitig an einem Umfangsbund 24 der Abtriebswelle 9 abstützt. Axial benachbart zu der Stellhülse 5 befindet sich hinter der Stellhülse 5 ein in axialer Richtung betrachtetes, im Betrieb rotierendes statisches Ringelement 25, welches nicht zur Verstellung der Spannbacken 4 dient. Die hintere Stirnseite des Ringelementes 25 bildet gemeinsam mit der hinteren Stirnseite des inneren Hülsenabschnittes 23 das axial hintere Ende 6 der Werkzeugspanneinheit 3, wobei auch in dem Ausführungsbeispiel gemäß Fig. 4 das axial hintere Ende 6 der Werkzeugspanneinheit 3, also sowohl das hintere Ende des Hülsenabschnittes 23 als auch das hintere Ende des Ringelementes 25, in axialer Richtung nach vorne von dem Einstellring 12, genauer von der Umfangswand 15 bzw. von dem vorderen Ende 16 der Umfangswand 15 in axialer Richtung nach vorne überragt wird. Ebenso liegt die vordere Stirnseite des Getriebegehäuses 10 innerhalb der Werkzeugspanneinheit 3.

Wie aus Fig. 4 weiter zu entnehmen ist, ist das axial hintere Ende des Ringelementes 25 in der Kammer 18 angeordnet, wohingegen das axial hintere Ende des Hülsenabschnittes 23 in einer vorderen Ausnehmung 22 angeordnet ist, die in axialer Richtung nach hinten vom dem Umfangsbund 24 der Abtriebswelle 9 begrenzt wird. In radialer Richtung nach innen wird die Ausnehmung 22 von der Abtriebswelle 9 und in radialer Richtung nach außen von dem Getriebegehäuse 10 begrenzt. Die Ausnehmung 22 befindet sich radial innerhalb der Umfangswand 24 des Einstellrings 12.

## Patentansprüche

1. Handwerkzeugmaschine mit einer Werkzeugspanneinheit (3) und einem Einstellring (12), wobei der Einstellring (12) ein Drehmoment-Einstellring ist, mit dem eine Drehmomentkupplung (13) einstellbar ist, **dadurch gekennzeichnet, dass** der Einstellring (12) ein axial hinteres Ende (6) der Werkzeugspanneinheit (3), zumindest bei vollständig geöffneter Werkzeugspanneinheit (3), in axialer Richtung nach vorne überragt, und dass das axial hintere Ende (6) der Werkzeugspanneinheit (3) radial zwischen dem Einstellring (12) und einer Abtriebswelle (9), vorzugsweise radial zwischen dem Einstellring (12) und einem Getriebegehäuse (10), angeordnet ist.

2. Handwerkzeugmaschine nach Anspruch 1, **dadurch gekennzeichnet, dass** das in axialer Richtung nach vorne von dem Einstellring (12) überragte, axial hintere Ende (6) der Werkzeugspanneinheit (3) von einer äußeren Stellhülse (5) der Werkzeugspanneinheit (3) gebildet ist.

3. Handwerkzeugmaschine nach Anspruch 1, **dadurch gekennzeichnet, dass** das in axialer Richtung nach vorne von dem Einstellring (12) überragte, axial hintere Ende (6) der Werkzeugspanneinheit (3) von einem in axialer Richtung betrachtet statischen Ringelement (25) der Werkzeugspanneinheit (3) gebildet ist

4. Handwerkzeugmaschine nach einem der vorhergehenden Ansprüche, **dadurch gekennzeichnet, dass** das in axialer Richtung nach vorne von dem Einstellring (12) überragte, axial hintere Ende (6) der Werkzeugspanneinheit (3), zumindest bei vollständig geöffneter Werkzeugspanneinheit (3), von mindestens einer verstellbaren Spannbacke (4) gebildet ist.

5. Handwerkzeugmaschine nach einem der vorhergehenden Ansprüche, **dadurch gekennzeichnet, dass** das axial hintere Ende (6) der Werkzeugspanneinheit (3) in einer nach axial vorne offenen Kammer (18) aufgenommen ist, die radial nach außen von dem Einstellring (12) begrenzt ist.

6. Handwerkzeugmaschine nach Anspruch 5, **dadurch gekennzeichnet, dass** die Kammer (18) nach axial hinten von dem Einstellring (12), vorzugsweise einer radial nach innen weisenden Ringwand (17) des Einstellrings (12) begrenzt ist.

7. Handwerkzeugmaschine nach Anspruch 6, **dadurch gekennzeichnet, dass** der Ringwand (17) ein Axialanschlag (20), vorzugsweise ein an einem Getriebegehäuse (10) angeordneter Sicherungsring, zugeordnet ist.

8. Handwerkzeugmaschine nach Anspruch 1, **dadurch gekennzeichnet, dass** die Drehmomentkupplung (13) mittels des Einstellrings (12) verriegelbar ist.

9. Handwerkzeugmaschine nach einem der vorhergehenden Ansprüche, **dadurch gekennzeichnet, dass** mittels des Einstellrings (12) zumindest eine Getriebefunktion, insbesondere eine Schlagbohrfunktion, schaltbar ist.

10. Handwerkzeugmaschine nach einem der vorhergehenden Ansprüche, **dadurch gekennzeichnet, dass** eine vordere Stirnseite eines Getriebegehäuses (10) axial in die Werkzeugspanneinheit (13) hinein ragt.

## Claims

1. Portable power tool having a tool clamping unit (3) and an adjusting ring (12), wherein the adjusting ring (12) is a torque adjusting ring by way of which a torque clutch (13) is adjustable, **characterized in that** the adjusting ring (12) projects forward in the axial direction beyond an axially rear end (6) of the tool clamping unit (3), at least with the tool clamping unit (3) fully open, and **in that** the axially rear end (6) of the tool clamping unit (3) is arranged radially between the adjusting ring (12) and an output shaft (9), preferably radially between the adjusting ring (12) and a transmission housing (10).

2. Portable power tool according to Claim 1, **characterized in that** the axially rear end (6), beyond which the adjusting ring (12) projects forward in the axial direction, of the tool clamping unit (3) is formed by an external setting sleeve (5) of the tool clamping unit (3).

3. Portable power tool according to Claim 1, **characterized in that** the axially rear end (6), beyond which the adjusting ring (12) projects forward in the axial direction, of the tool clamping unit (3) is formed by a ring element (25) of the tool clamping unit (3), said ring element (25) being static as viewed in the axial direction.

4. Portable power tool according to one of the preceding claims, **characterized in that** the axially rear end (6), beyond which the adjusting ring (12) projects forward in the axial direction, of the tool clamping unit (3) is formed, at least with the tool clamping unit (3) fully open, by at least one adjustable clamping jaw (4).

5. Portable power tool according to one of the preceding claims, **characterized in that** the axially rear end (6) of the tool clamping unit (3) is received in a chamber (18) which is open axially toward the front and is bounded radially toward the outside by the adjusting ring (12).

6. Portable power tool according to Claim 5, **characterized in that** the chamber (18) is bounded axially toward the rear by the adjusting ring (12), preferably by a ring wall (17), directed radially toward the inside, of the adjusting ring (12).

7. Portable power tool according to Claim 6, **characterized in that** the ring wall (17) is assigned an axial stop (20), preferably a securing ring arranged on a transmission housing (10).

8. Portable power tool according to Claim 1, **characterized in that** the torque clutch (13) is lockable by means of the adjusting ring (12).

9. Portable power tool according to one of the preceding claims, **characterized in that** at least one transmission function, in particular a percussion drilling function, is switchable by means of the adjusting ring (12).

10. Portable power tool according to one of the preceding claims, **characterized in that** a front end side of a transmission housing (10) projects axially into the tool clamping unit (13).

## Revendications

1. Machine-outil à main dotée d'une unité de serrage d'outil (3) et d'une bague de réglage (12), la bague de réglage (12) étant une bague de réglage de couple de rotation permettant de régler un embrayage de couple de rotation (13), **caractérisée en ce que** la bague de réglage (12) ressort, dans la direction axiale vers l'avant, d'une extrémité arrière (6) dans le plan axial de l'unité de serrage d'outil (3), au moins en présence d'une unité de serrage d'outil (3) entièrement ouverte, et que l'extrémité arrière (6) est disposée dans le plan axial de l'unité de serrage d'outil (3), dans le plan radial entre la bague de réglage (12) et un arbre d'entraînement en sortie (9), de préférence dans le plan radial entre la bague de réglage (12) et un carter d'entraînement (10).

2. Machine-outil à main selon la revendication 1, **caractérisée en ce que** l'extrémité arrière (6) dans le plan axial, saillant dans la direction axiale vers l'avant hors de la bague de réglage (12), de l'unité de serrage d'outil (3) est formée par une douille de réglage (5) extérieure de l'unité de serrage d'outil (3).

3. Machine-outil à main selon la revendication 1, **caractérisée en ce que** l'extrémité arrière (6) dans le plan axial, saillant dans la direction axiale vers l'avant hors de la bague de réglage (12), de l'unité de serrage d'outil (3) est formée par un élément annulaire (25) statique, considéré dans la direction axiale, de l'unité de serrage d'outil (3).

4. Machine-outil à main selon l'une quelconque des revendications précédentes, **caractérisée en ce que** l'extrémité arrière (6) dans le plan axial, saillant dans la direction axiale vers l'avant hors de la bague de réglage (12), de l'unité de serrage d'outil (3), est formée, au moins en présence d'une unité de serrage d'outil (3) entièrement ouverte, par au moins une mâchoire de serrage (4) réglable.

5. Machine-outil à main selon l'une quelconque des revendications précédentes, **caractérisée en ce que** l'extrémité arrière (6) dans le plan axial de l'unité de serrage d'outil (3) est logée dans une chambre (18) ouverte vers l'avant dans le plan axial délimitée l'extérieur dans le plan radial vers par la bague de réglage (12).

6. Machine-outil à main selon la revendication 5, **caractérisée en ce que** la chambre (18) est délimitée vers l'arrière dans le plan axial par la bague de réglage (12), de préférence une paroi annulaire (17) orientée vers l'intérieur dans le plan radial de la bague de réglage (12).

7. Machine-outil à main selon la revendication 6, **caractérisée en ce qu'**une butée axiale (20), de préférence une bague de fixation disposée au niveau d'un carter d'entraînement (10), est associée à la paroi annulaire (17).

8. Machine-outil à main selon la revendication 1, **caractérisée en ce que** l'embrayage de couple de rotation (13) peut être verrouillé au moyen de la bague de réglage (12).

9. Machine-outil à main selon l'une quelconque des revendications précédentes, **caractérisée en ce qu'**au moins une fonction d'entraînement, notamment une fonction de perçage à percussion, peut être connectée à l'aide de la bague de réglage (12).

10. Machine-outil à main selon l'une quelconque des revendications précédentes, **caractérisée en ce qu'**un côté frontal avant d'un carter d'entraînement (10) rentre dans le plan axial dans l'unité de serrage d'outil (13).
